# EUROPEAN PATENT SPECIFICATION

(11) **EP 0 360 174 B1**
(45) Date of publication and mention of the grant of the patent: **08.12.1993**
(21) Application number: 89117161.3
(22) Date of filing: 16.09.1989
(51) Int. Cl.: A22C 25/14

(54) **Method for mechanical cleaning of freshly caught roundfish and apparatus for carrying out of this**
Verfahren und Apparat zum mechanischen Reinigen von Rundfischen
Procédé et appareil pour nettoyer mécaniquement des poissons ronds

(30) Priority: 21.09.1988 DK 5242/88
(43) Date of publication of application: 28.03.1990
(73) Proprietor: NORDISCHER MASCHINENBAU RUD. BAADER GMBH + CO KG, 23560 Lübeck (DE)
(72) Inventor: Kure, Ingvard, DK-3700 Ronne (DK)

(56) References cited:
- EP-A- 0 258 941
- DE-A- 2 024 975
- GB-A- 1 100 292
- US-A- 3 364 517
- US-A- 3 510 910

## Description

Slaughtering and cleaning of fish is in modern time to a steadily larger extent carried out on board fishing vessels. Different methods and a number matching mechanical equipments with the express purpose of reaching the fastest possible processing resulting in the highest possible yields have been suggested. This involves not only minimising the waste of fish meat, but the entrails should also be eviscerated intact in order to remain a quality raw material for the canning industry or the drug industry or for other purposes.

The above objects are fulfilled by this invention, and it relates to a method for mechanical cleaning of freshly caught roundfish, especially cods, fixed in a transportation unit, i.e a revolving stand, the method involving one step in which the head of the fish is partly separated from the trunk by means of a neck cut comprising a first cut severing the isthmus of the fish and a second cut severing the throat of the fish, and reaching from the ventral side towards the spine, and another step performed subsequently in which the trunk of the fish is opened by means of a belly cut having its starting point at the edge of the throat cut, allowing for eviscerating the entrails intact.

Especially the throat cut is done in such a way, that it produces a maximum meat yield and simultaneously is careful and efficient in cutting free the entrails.

A method for slaughtering of fish as well as a device for performing such method are known from US-Patent 3 364 517. This document shows a piercing tool comprising a first cutting tool making a first cut extending away from the gullet, and a second cutting tool which passes through said first cut, said second cut extending towards the spinal column in order to sever the gullet.

This method entails ergonomical and economical disadvantages as the operator has to act precisely effecting thereby only low throughput.

According to the invention the method is characteristic in a step in which during or after the fixation of the trunk of the fish in the transportation unit the head of the fish is bent backwards by an angle of approximately 30° relative to the longitudinal direction of the trunk of the fish, in order to stretch the lower side of the neck, after which step the first cut and the second cut are carried out from the ventral side towards the spine whereby the first cut is placed in the stretched part of the neck and runs approximately along the foresdide of the lower part of the clavicle of the fish and the second one is placed so as to complete the first cut, and reach the spine and is directed towards a point on the spine at or a short distance ahead of the clavicle.

The stretching of the lower side of the neck and especially of the isthmus, which on the ventral side is connecting the head of the fish with its trunk, and which has an increasing thickness in the direction towards the clavicle, results in an easier cutting of this isthmus with the desired precision because the stretching is counteracting the tendency of the isthmus to give way to the knife used, normally a disk knife. When the cut is performed it is advisable to leave the cut not any deeper than what is required in order to secure a safe cutting of the isthmus. The isthmus may have a thickness of 10 - 15 mm in the plane of the cut. The throughcutting has the effect of releasing the ventral side of the fish from the strain caused by the stretching and consequently retracts from the cutting line creating an optimal initial shape for the introduction of the knife to execute the second or completing cut. This second cut must reach all the way to the spine in order to ensure a proper throughcutting of the gullet and the major blood vessels (aorta and cardinal veins). This second cut may, by and large, follow the clavicles without damaging these bones. In this way the clavicles can serve as supporting elements for the parts of the trunk adjacent the cut to the benefit of the succeeding manipulation, especially the cutting to open up the belly without damaging the entrails. The second cut must furthermore cut through the skin and membranes between the branchial cavity and the abdominal cavity of the fish and the suspension for the liver. For this operation as well the stretching, caused by the backwards bending of the head, is an advantage because as a consequence of their joints to the head the entrails are hoisted upwards relatively to the trunk.

In the above it is presupposed that the head is kept joined to the trunk by means of the spine, one of the reasons being to keep the trunk securely fixed during the carrying out of the belly cut and, if done, the tearing of the peritoneum in order to lay bare the stomach and other intestines. When the head is of no such use any more it may be separated from the trunk by means of a cut extending from the above mentioned second cut or by means of a neck cut.

By handling of the majority of the species of fish in question it is an advantage if the first cut is directed in a forwardly and towards the belly side headed angle at about 10 - 15° relative to the direction of the axis of the trunk, and that at its starting point the second cut has a larger angle which angle is preferably increasing with the depth of the cut.

If furthermore the depth of the first cut is adjusted to be the thickness of the isthmus at the position of the incision the very purpose of this manipulating step is ensured without risk of damage to the clavicles or the intestines.

According to the invention it is preferred that the depth of incision of the knife performing the the second cut is controlled by the lower side of the spine. The control may be carried out by having the edge of the knife protruding slightly relatively to a guiding element interacting with the spine and preventing the knife from cutting but insignificantly into the spine yet allowing for a deeper cut into the adjacent soft parts.

The invention is also referring to an apparatus for carrying out the method, which apparatus comprises a revolving stand having an approximately vertical axis and including holding devices for fixing the fish trunks as well as at least one throat cutting knife and cleaning tools arranged around the revolving stand for successive manipulation of the fishes fixed in the holding devices. The term "approximately vertical" is meant to explain, that the axis may be tilted somewhat away from the vertical i.e. in order to make it easier for the operator of the apparatus to place the fishes in the holding devices.

The apparatus according to the invention differs from mechanical equipment of known design in that the revolving stand above each holding device has a gadget capable of fixing the head of the fish in a position bent backwards in relation to the fixed trunk of the fish, and in that the apparatus in the direction of rotation of the revolving stand is equipped with an isthmus cutting knife with its cutting plane inclining 10 - 15° relative to the axis of the revolving stand and thereafter a second knife serving to perform a continuation of the isthmus cut and inclining at a larger angle relative to the axis of the trunk of the fish. This apparatus can manipulate the fish according the above described method.

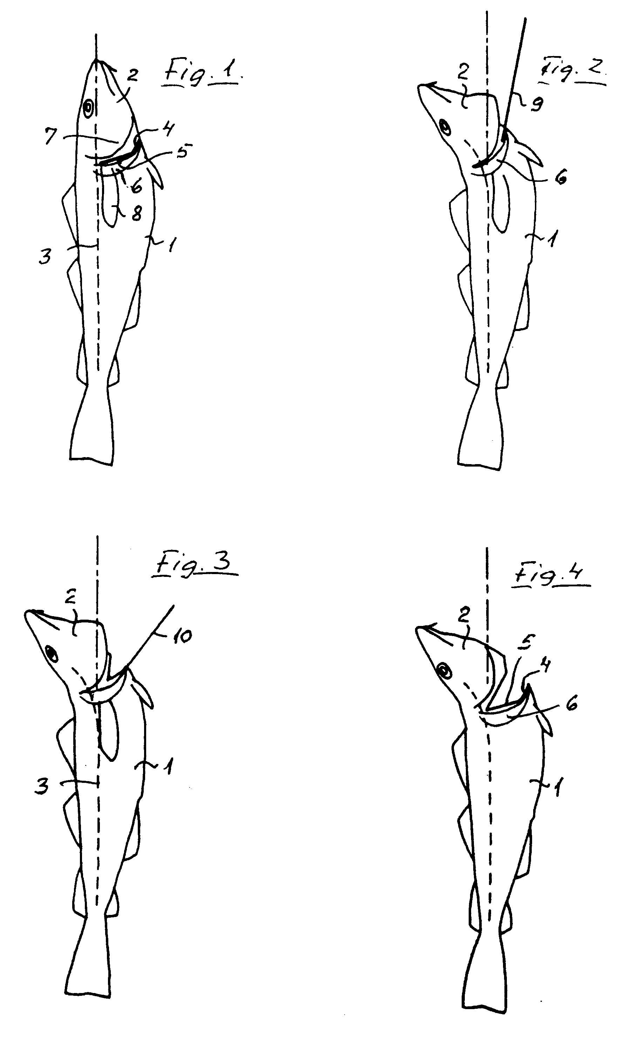

More details pertaining to the method and the apparatus according to this invention will be apparent from the following specification referring to the drawings in which
fig. 1
   shows an approximately vertically hanging fish with the desired throat cut marked,
fig. 2
   shows the same fish after the forcing back of the head and with marking of the direction of the first part of the throat cut,
fig. 3
   is a similar image to figure 2, but after finishing of the first cut and with marking of the direction of cutting at the beginning of the second or completing part of the throat cut,
fig. 4
   shows the fish when ready for performing the belly cut,
fig. 5
   shows a part of the revolving stand of the apparatus comprising a holding device in which a fish is placed, but not yet fixed in order to perform the throat cut,
fig. 6
   shows the same details as figure 5, but after the fixing of the fish, and
fig. 7
   is showing the cleaning tools for removing the entrails from the fish.

Figure 1 is sketching a cod the trunk and head of which are marked with the reference numerals 1 and 2 respectively. These should be partly separated by means of a throat cut reaching from the ventral side to the spine 3, which throat cut includes a first part 4 and a second part 5, and which is placed closely in front of the clavicles 6 of the fish and between the gill covers 7 and pectoral fins 8 of the fish.

Before performing the first part 4 of the throat cut the head 2 of the fish is forced backwards as indicated in figure 2 so that the axis of the head and the axis of the trunk 1 are inclined relative to one another at an angle of about 30°. The isthmus, which on the ventral side joins the head and the trunk, and which is to be cut through by means of the first cut closely in front of the clavicles 6, is thus stretched. A disk knife 9, whose cutting plane is indicated in the drawing, is inclined 10 - 15° in relation to the axis of the trunk of the fish, it is performing this first cut, and it is controlled in order to restrict the cut to the depth required for cutting through the isthmus. The knife may have an adjustable guide resting against the belly side of the fish in order to obtain correct placing of the cut in the fish dependent on its size.

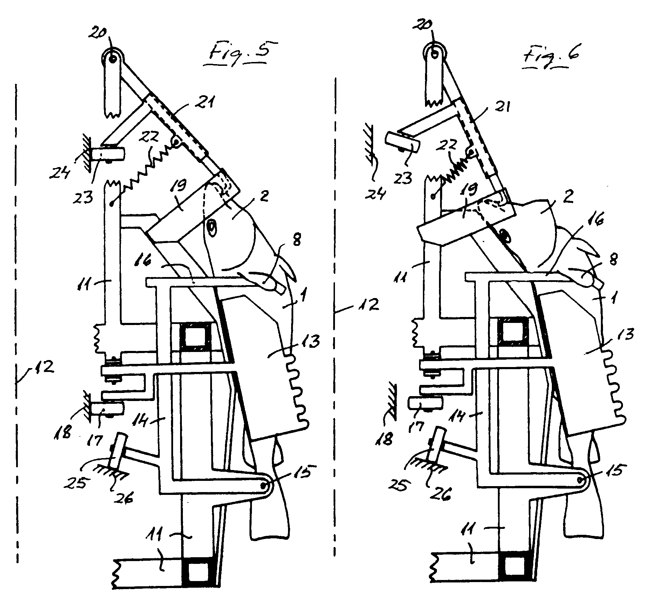

The throughcutting of the isthmus has the effect, that the belly part of the trunk below the cut 4 comes somewhat down leaving room for insertion of a disk knife 10, figure 3, for carrying out the second part 5 of the throatcut, which second part is to continue the first part 4 reaching the ventral side of the spine 3. Furthermore the cut 5 should run closely in front of the clavicles 6 and therefore have a direction different from that of the cut 4. Thus the knife 10 in its initial position is inclined relative to the axis of the fish trunk at a larger angle, and this inclination angle may be increased during the execution of the cut 5. The knife 10 may for this reason be hung pivotally supported by a bearing placed above the head 2 of the fish and to the back of the axis of the trunk, so that the cutting edge of the knife 10 when inserted into the fish moves along a circular path having its tangent direction at the spine 3 approximately perpendicular to the backwardly bent part of the spine. The cut 5 should be taken all the way towards and perhaps slightly into the spine 3. The maximum depth of insertion of the knife 10 may therefore beneficially be controlled by the ventral side of the spine 3 as explained above.

Due to the curving and the position of the cut 5 relatively to the disk knife 10 the cut 5 will be reaching that far into the abdominal cavity of the fish, that the membranes between the branchial and the abdominal cavities as well as the suspension of the liver will securely be cut through without throughcutting of the clavicles. The term 'the position of the cut 5' is meant to explain, that the periphery of the disk knife in its cutting point, i.e. its lowest point in the drawing, is moved inwards into the fish in a direction having an angle relative to the plane of the disk knife.

After removing of the knife 10 the fish is as outlined in figure 4, and it is ready for she execution of the belly cut and for tearing of peritoneum by means of adequate tools, if necessary . The extended throat cut 4, 5 is leaving optimal access for these tools, and at the same time the clavicles 6 are functioning as a reasonable shoring up of the part of the trunk next to the cut, as this cut may be placed so, that there is no soft parts above the clavicles.

The figures 5 and 6 show schematically relevant parts of an embodiment of the apparatus according to the invention. This embodiment comprises a revolving stand 11 having an approximately vertical axis 12 and a number of holding devices, of which one is shown only, equidistantly arranged along the perimeter of the revolving stand. The holding device includes a pair of tongs with two plate shaped jaws 13 for fixing of the trunk 1 of a fish body, and a bow 14 pivotally supported by a bearing 15 arranged on the frame 11, which bow at its upper end comprises a pair of outwardly extending arms 16 meant to reach under the pectoral fins 8 of the fish.

At the working station in which the fish is to be placed between the jaws 13 the pair of tongs are kept in an open position by a roll 17 interacting with a fixed guide 18. When the roll 17 moves free of the guide 18 a spring (not shown) will close the pair of tongs about the trunk 1 fixing it in the revolving stand.

When the fish is placed between the jaws 13 its nose is run into a bow or ring 19 catching the nose and serving to pull the head 2 backwards into the position according to figure 6. For this purpose the bow 19 is mounted on a pivoting arm 21 supported by an upper bearing 20. The pivoting arm 21 is joined to a tension spring 22 providing a pull towards the axis 12 and it is guided by a roll 23 interacting with a fixed guiding rail 24. The bow 19 is telescopically supported in the pivoting arm 21 so that from a lower starting position it is able to move upwards when a fish is fed into the holding device.

After performance of the second cut 5 the bow 14 with the arms 16 for the pectoral fins can be swung anticlockwise in its bearing 15 in order to leave room for a third knife for cutting off the head 2 from the trunk 1 if so desired. This pivoting movement may be controlled by a roll 25 and an interacting guide rail 26.

The fish manipulated and fixed as described above may hereafter get its belly opened up by means of a not shown cutting tool of a design known within the art and comprising a disk knife. Guided by suitable guides the cutting tool is moved into the area of the abdominal cavity and towards anus.

Covering of those parts of the cutting edge of the disk knife closest to the fish e.g according to the german patent specification no. 12 93 419 can prevent that the intestines are damaged and ensure that the belly cut will end close to anus.

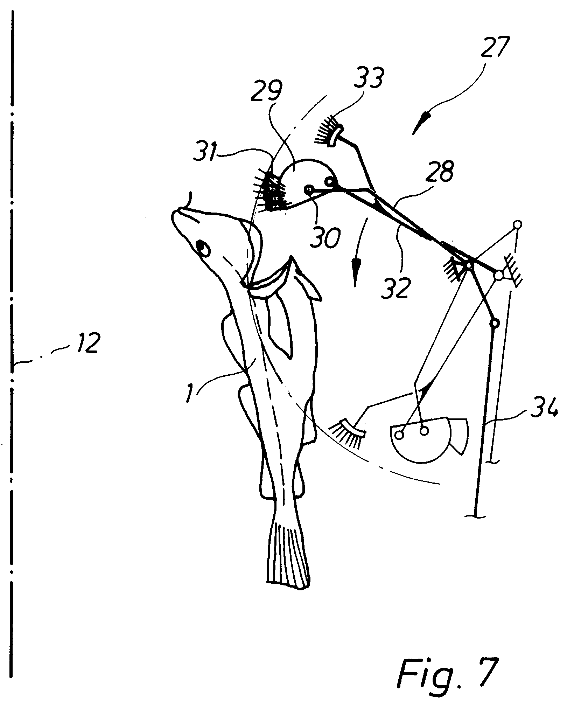

The intestines may thereafter be cleaned out undamaged by means of the cleaning tool 27, figure 7. This is fastened to a supporting arm 28 and comprises a roller body 29 fixed to a shaft 30 with a bearing support on the supporting arm 28. From part of the perimeter surface of the roller body 29 a number of fingerlike cleaning elements 31 are protruding substantially in a radial direction. The cleaning elements are preferably made of a flexible material e.g. polyurethane and having at their free ends a rounded shape. The roller body 29 is during its movement through the abdominal cavity actuated to make a pivoting movement. This movement is generated by means of a drop arm 32 pivotally joined to the roller body 29 and at some other point pivotally suspended from the frame of the apparatus. The drop arm 32 is also supporting a brush body 33, which is trailing the cleaning tool and cares for the cleaning of residual parts of intestines that may still remain attached to the inside of the abdominal cavity. The pivoting movement of the cleaning tool 27 may be derived from the rotation of the revolving stand 11 and may be transmitted by a push rod hinged to the supporting arm 28.

## Claims

1. Method for mechanical cleaning of freshly caught round-fish, especially cods, fixed in a transportation unit, i.e. a revolving stand, the method involving a first step in which the head (2) of the fish is partly separated from the trunk (1) by means of a neck cut comprising a first cut severing the isthmus of the fish and a second cut severing the throat of the fish, and reaching from the ventral side towards the spine (3), and a second step performed subsequently in which the trunk (1) of the fish is opened by means of a belly cut having its starting point at the edge of the throat cut, allowing for eviscerating the entrails intact, **characterised** in that the head (2) of the fish during or after fixation of the trunk (1) in the transportation unit is bent backwards by an angle of approximately 30° relative to the longitudinal direction of the trunk of the fish, in order to stretch the lower side of the neck, after which stretching the first cut and the second cut are carried out from the ventral side towards the spine (3) whereby the first cut is placed in the stretched part of the neck and runs approximately along the foreside of the lower part of the clavicle of the fish and the second cut is placed so as to complete the first cut and reach the spine (3) and is directed towards a point on the spine at or a short distance ahead of the clavicles (6).

2. Method according to claim 1, **characterised** in that the first cut (4) is given a forwardly and towards the belly side headed angle at about 10 - 15° relative to the direction of the axis of the trunk, and that at its starting point the second cut has a larger angle which preferably increases with the depth of the cut.

3. Method according to claim 1, **characterised** in that the depth of the first cut (4) is adjusted to be the thickness of the isthmus measured in the cutting plane.

4. Method according to claim 1, **characterised** in that the depth, to which the knife used for the second cut (5) is inserted, is controlled by the bellyside surface of the spine (3) of the fish.

5. Method according to claim 1, **characterised** in that the second cut is executed by means of a disk knife the periphery of which is during the cutting moved inwardly into the fish along the foreside of the clavicles (6) and in a direction having an angle relative to the plane of the disk knife.

6. Apparatus for carrying out the method according to one or more of the above claims and comprising a revolving stand (11) with an approximately vertical axis (12) and a number of holding devices (13) for fixation of the trunks (1) of the fish, and arranged around the revolving stand at least one throat cutting knife placed after the position for fixing of the fish as seen in the direction of rotation of the revolving stand, and cleaning tools for successive manipulations of the fish fixed in the holding devices, **characterised** in that the revolving stand (11), arranged above each holding device (13), displays a mechanical member (19) for fixing the head (2) of the fish in a backwardly bent position relative to the position of the fixed trunk (1) of the fish, the plane of the throatcutting knife (9) forms an angle 10 - 15° with the axis of the revolving stand, and thereafter seen in the direction of rotation of the revolving stand is arranged a second knife (10) the plane of which forms a larger angle with the axis of the revolving stand than the aforesaid angle, which second knife is adapted to continue the cut.

7. Apparatus according to claim 6, **characterised** in that the mechanical member for bending of the head of the fish backwards comprises a bow (19) for engagement with the lower of the nose of the fish, which bow, when the fish is placed in the fixing device (13), can move in the direction of the axis 12 of the revolving stand (11).

8. Apparatus according to claim 7, **characterised** in that the bow (19) is supported by the lower end of a telescopic rod (21), which is at its upper part pivotally supported in the revolving stand (11), and which by the action of a spring tends to move towards the axis (12), and which futhermore during the rotation of the revolving stand is guided by a cam-follower (23) interacting with a guide rail (24) fixed relative to the frame of the apparatus.

9. Apparatus according to claim 6, **characterised** in that the cleaning tool (27) comprises a gutting tool, which is mounted on a mainly radially relatively to the revolving stand (11) arranged and into the path of the fish controllable supporting arm (28) and a roller (29) capable of rotating around its axis (30) and having arranged at least a part of its outer surface, mainly in radial direction protuding, gutting elements (31) of fingerlike shape and preferably made of a flexible material, and that the gutting tool, when guided into the path of the fish, is activated into a movement taking its start in the area of the opened branchial cavity in each fish and passes through the opened abdominal cavity of the fish to anus, during which movement the roller (29) turns around its axis (30).

10. Apparatus according to claim 9, **characterised** in that the roller (29) in interacting fashion is joined to a drop arm (32), which in turn together with the supporting arm (28) and the roller (29) forms a rod pinion, and that the drop arm (32) is also supporting a brush body (33) trailing the roller (29).

## Patentansprüche

1. Verfahren zum maschinellen Entweiden von frisch gefangenem Rundfisch, insbesondere Kabeljau, der in einer Fördereinheit fixiert ist, z. B. in einem Drehgestell, wobei das Verfahren umfaßt: einen ersten Schritt, in dem der Kopf des Fisches teilweise von dem Rumpf (1) getrennt wird durch einen Kehlschnitt, der einen ersten, den Isthmus des Fisches trennenden Schnitt und einen zweiten, den Schlund des Fisches trennenden Schnitt umfaßt, der sich von der Bauchseite zum Rückgrat (3) erstreckt, und einen zweiten nachfolgend durchgeführten Schritt, in dem der Rumpf (1) des Fisches durch einen Bauchschnitt geöffnet wird, der von dem Kehlschnitt ausgeht und das Herausnehmen der Eingeweide in unbeschädigtem Zustand erlaubt, **dadurch gekennzeichnet,** daß der Kopf des Fisches während oder nach der Fixierung des Rumpfes (1) in der Fördereinheit in einem Winkel von ungefähr 30 ° in bezug auf die Längsrichtung des Rumpfes nach hinten gebogen wird, um die Unterseite der Kehle zu spannen, nach welcher Spannung der erste und der zweite Schritt von der Bauchseite her gegen das Rückgrat (3) ausgeführt werden, wobei der erste Schnitt in dem gespannten Teil der Kehle geführt wird und ungefähr längs der Vorderseite des unteren Teils des Schultergürtelbogens des Fisches verläuft und der zweite Schnitt geführt wird, um den ersten Schnitt zu vervollständigen und das Rückgrat (3) zu erreichen und der auf einen Punkt des Rückgrates an oder in einem kurzen Abstand vor dem Schultergürtelbogen (6) gerichtet ist.

2. Verfahren nach Anspruch 1 , **dadurch gekennzeichnet** , daß der erste Schnitt (4) unter einem voraus und gegen die Bauchseite weisenden Winkel von ungefähr 10 bis 15 ° zur Richtung der Achse des Rumpfes geführt wird und daß der zweite Schnitt an seinem Ansatzpunkt einen größeren Winkel aufweist, der vorzugsweise mit der Tiefe des Schnittes zunimmt.

3. Verfahren nach Anspruch 1 , **dadurch gekennzeichnet** , daß die Tiefe des ersten Schnittes (4) auf die Dicke des in der Schneidebene gemessenen Isthmus' eingestellt wird.

4. Verfahren nach Anspruch 1 , **dadurch gekennzeichnet** , daß die Eindringtiefe des zur Ausführung des zweiten Schnittes (5) dienende Messer von der bauchseitigen Oberfläche des Rückgrates (3) des Fisches gesteuert wird.

5. Verfahren nach Anspruch 1 , **dadurch gekennzeichnet** , daß der zweite Schnitt (5) durch ein Kreismesser ausgeführt wird, dessen Umfang während des Schnittes entlang der Vorderseite des Schultergürtelbogens (6) in den Fisch hinein bewegt wird in einer Richtung, die einen Winkel zur Planfläche des Messers bildet.

6. Vorrichtung zur Durchführung des Verfahrens nach einem oder mehreren der vorstehenden Ansprüche, umfassend ein Drehgestell (11) mit einer im wesentlichen senkrechten Achse (12) und einer Anzahl Halterungen (13) zum Fixieren der Rümpfe (1) der Fische, sowie, an dem Drehgestell (11) angeordnet, mindestens ein Schlund-Trennmesser (9) hinter der Fixierstelle des Fisches, gesehen in Richtung der Drehbewegung des Drehgestells (11) , und Reinigungswerkzeuge zur sukzessiven Bearbeitung des in den Halterungen fixierten Fisches, **dadurch gekennzeichnet** , daß das Drehgestell (11) über jeder Halterung (13) ein mechanisches Element zum Fixieren des Kopfes (2) des Fisches in einer zu der Ausrichtung des gehalterten Rumpfes (1) des Fisches rückwärts gebogenen Lage aufweist, die Schnittebene des Schlund-Trennmessers (9) mit der Achse des Drehgestells (11) einen Winkel von 10 bis 15 ° bildet und nachfolgend in Umlaufrichtung des Drehgestells (11) gesehen ein zweites Messer (10) angeordnet ist, dessen Schnittebene mit der Achse des Drehgestells (11) einen größeren Winkel bildet als der vorgenannte, wobei das zweite Messer (10) eingerichtet ist, den Schnitt fortzusetzen.

7. Vorrichtung nach Anspruch 6 , **dadurch gekennzeichnet** , daß das mechanische Element zum Rückbiegen des Kopfes des Fisches einen Bügel (19) zum Eingriff in die Unterseite der Schnauze des Fisches umfaßt, wobei sich der Bügel (19) in Richtung auf die Achse (12) des Drehgestells (11) bewegen kann, wenn der Fisch in der Halterung (13) plaziert ist.

8. Vorrichtung nach Anspruch 7 , **dadurch gekennzeichnet** , daß der Bügel (19) von dem unteren Ende einer Teleskopstange (21) getragen wird, welche an ihrem oberen Teil schwenkbar in dem Drehgestell (11) gelagert ist und unter Wirkung einer Feder gegen die Achse (12) strebt und welche darüber hinaus während der Rotation des Drehgestells (11) durch eine Steuerrolle (23) geführt ist, die mit einer Führungsschiene (24) zusammenwirkt, die an dem Rahmen der Vorrichtung befestigt ist.

9. Vorrichtung nach Anspruch 6 , **dadurch gekennzeichnet** , daß das Reinigungswerkzeug (27) umfaßt: ein Entweidewerkzeug, das an einem Tragarm (28) befestigt ist, der im wesentlichen radial zu dem Drehgestell (11) angeordnet und in den Förderweg des Fisches einsteuerbar ist sowie einen um eine Achse (30) schwenkbaren Schwenkkörper (29) , der zumindest an einem Teil seines äußeren Umfangs im wesentlichen in radialer Richtung vorspringende Entweideelemente (31) von fingerähnlicher Gestalt und vorzugsweise aus flexiblem Werkstoff aufweist, und daß das Reinigungswerkzeug (27) , wenn es in den Förderweg des Fisches geführt ist, in eine Bewegung gebracht wird, die ihren Anfang im Bereich der geöffneten Kiemenhöhle jedes Fisches nimmt und durch die geöffnete Bauchhöhle des Fisches zum Anus verläuft, während welcher Bewegung der Schwenkkörper (29) um seine Achse (30) schwenkt.

10. Vorrichtung nach Anspruch 9 , **dadurch gekennzeichnet** , daß der Schwenkkörper (29) mit einem Lenker (32) wirkverbunden ist, der zusammen mit dem Tragarm (28) und dem Schwenkkörper (29) einen Schwenktrieb bildet, und daß der Lenker (32) weiter einen Bürstenkörper (33) trägt, der dem Schwenkkörper (29) folgt.

## Revendications

1. Procédé de nettoyage mécanique de poissons ronds fraîchement pêchés, en particulier de morues, fixés dans une unité de transport, c'est-à-dire une station tournante, le procédé impliquant une première étape dans laquelle la tête (2) du poisson est partiellement séparée du tronc (1) au moyen d'une coupe de nuque comprenant une première coupe qui tranche l'isthme du poisson et une deuxième coupe qui tranche la gorge du poisson et parvient jusqu'à l'épine dorsale (3) en partant du côté ventral, et une deuxième étape, exécutée ensuite, dans laquelle le tronc (1) du poisson est ouvert, au moyen d'une coupe ventrale dont 1e point de départ est au bord de la coupe de la gorge, permettant d'éviscérer les entrailles intactes, **caractérisé** en ce que la tête (2) du poisson est incurvée en arrière, pendant et après la fixation du tronc (1) dans l'unité de transport, d'un angle d'environ 30° par rapport à la direction longitudinale du tronc du poisson afin d'étirer le côté inférieur de la nuque, la première coupe et la deuxième coupe étant, à la suite de cet étirage, effectuées jusqu'à l'épine dorsale (3) en partant du côté ventral, la première coupe étant placée dans la partie étirée de la nuque et s'étend approximativement le long du côté avant de la partie inférieure de la clavicule du poisson et la seconde coupe étant placée de façon à compléter la première coupe et d'atteindre la colonne vertébrale (3) et étant dirigée vers un point de la colonne vertébrale situé aux clavicules (6) ou à une courte distance en avant de celles-ci.

2. Procédé selon la revendication 1, **caractérise** en ce que la première coupe (4) est orientée vers l'avant et vers le côté ventral en formant un angle d'environ 10 à 15° par rapport à la direction de l'axe du tronc, et en ce que la deuxième coupe forme, à son point de départ, un angle plus grand qui augmente, de préférence, avec la profondeur de la coupe.

3. Procédé selon la revendication 1, **caractérisé** en ce que la profondeur de la première coupe (4) est ajustée de manière à être l'épaisseur de l'isthme mesurée dans le plan de coupe.

4. Procédé selon la revendication 1, **caractérisé** en ce que la profondeur à laquelle est inséré le couteau utilisé pour la deuxième coupe (5) est réglée par la surface, tournée vers le côté ventre, de l'épine dorsale (3) du poisson.

5. Procédé selon la revendication 1, **caractérisé** en ce que la deuxième coupe est exécutée au moyen d'un couteau en disque dont la périphérie est déplacée pendant la coupe vers l'intérieur du poisson le long du côté avant des clavicules (6) et dans une direction formant un angle par rapport au plan du couteau en disque.

6. Appareil de mise en oeuvre du procédé selon une ou plusieurs des revendications précédentes et comprenant une station tournante (11) à axe approximativement vertical (12) et un nombre de dispositifs (13) de maintien pour fixer les troncs (1) des poissons ainsi que, agencés autour de la station tournante, au moins un couteau de coupe de la gorge, placé dans le sens de rotation de la station tournante après la position de fixation du poisson, et des outils de nettoyage pour des manipulations successives du poisson fixés dans les dispositifs de maintien, **caractérisé** en ce que la station tournante (11) présente un organe mécanique (19) agencé au-dessus de chaque dispositif de maintien (13) pour fixer la tête (2) du poisson dans une position incurvée vers l'arrière par rapport à la position du tronc fixe (1) du poisson, le plan du couteau (9) de coupe de la gorge forme un angle de 10 à 15° avec l'axe de la station tournante et un deuxième couteau (1 ), dont le plan forme un plus grand angle avec l'axe de la station tournante de l'angle précédent et qui est apte à poursuivre la coupe, est disposé ensuite dans la direction de rotation de la station tournante.

7. Appareil selon la revendication 6, **caractérisé** en ce que l'organe mécanique prévu pour incurver en arrière la tête du poisson comprend un arc (19) pour venir en contact avec la partie inférieure du nez du poisson, arc qui peut se déplacer dans la direction de l'axe (12) de la station tournante (11) lorsque le poisson est placé dans le dispositif de maintien (13).

8. Appareil selon la revendication 7, **caractérisé** en ce que l'arc (19) est supporté par l'extrémité inférieure d'une tige télescopique (21) qui est supportée à pivotement à sa partie supérieure dans la station tournante (11) et qui tend à se déplacer vers l'axe (12) sous l'effet d'un ressort, et qui est, en outre, guidé pendant la rotation de la station tournante, par une contre-came (23) qui interagit avec un rail de guidage (24) fixe par rapport au cadre de l'appareil.

9. Appareil selon la revendication 6, **caractérisé** en ce que l'outil de nettoyage (27) comprend un outil d'éventration, qui est monté de manière principalement radiale par rapport à la station tournante (11) et un bras réglable de support (28) agencé pour entrer dans le trajet du poisson et un galet (29) susceptible de tourner autour de son axe (30) et portant au moins sur une partie de sa surface extérieure des éléments d'éventration (31) en forme de doigts, en saillie principalement dans la direction radiale, et constitués, de préférence, d'une matière flexible, et en ce que l'outil d'éventration est activé, lorsqu'il est guidé pour entrer dans le trajet du poisson, en un déplacement qui débute dans la zone de la cavité branchiale ouverte de chaque poisson et traverse la cavité abdominale ouverte du poisson vers l'anus, déplacement pendant lequel le galet (29) tourne autour de son axe (30).

10. Appareil selon la revendication 9**, caractérisé** en ce que le galet (29) est assemblé de façon interactive à un bras tombant (32) qui forme lui-même avec le bras de support (28) et le galet (29) un pignon de tige et en ce que le bras tombant (32) supporte aussi un corps de brosse (33) qui suit le galet (29)
